(19) Europäisches Patentamt / European Patent Office / Office européen des brevets

(11) **EP 2 677 368 A1**

(12) **DEMANDE DE BREVET EUROPEEN**

(43) Date de publication:
**25.12.2013 Bulletin 2013/52**

(51) Int Cl.:
***G03H 1/22*** *(2006.01)*

(21) Numéro de dépôt: **13172964.2**

(22) Date de dépôt: **20.06.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **20.06.2012 FR 1255779**

(71) Demandeur: **COMMISSARIAT A L'ENERGIE ATOMIQUE ET AUX ENERGIES ALTERNATIVES 75015 Paris (FR)**

(72) Inventeur: **Martinez, Christophe 38100 GRENOBLE (FR)**

(74) Mandataire: **Thibon, Laurent Cabinet Beaumont 1, rue Champollion 38000 Grenoble (FR)**

(54) **Dispositif et procédé de lecture d'un hologramme synthétique**

(57) L'invention concerne un dispositif de lecture de l'image source d'un hologramme synthétique constituant la transformée de Fourier de l'image source formé sur un support (40), comprenant une lentille (42) positionnée pour former la transformée de Fourier de l'hologramme dans le plan d'un système de détection d'images (44), les positions relatives de la lentille et dudit support étant choisies pour qu'un nombre désiré de répliques de l'image soit affiché dans le plan du système de détection, ce dispositif comprenant en outre un système de traitement (48) adapté à réaliser une combinaison de répliques de l'image formées dans le plan du système de détection.

Fig 4

EP 2 677 368 A1

**Description**

Domaine de l'invention

La présente invention concerne un dispositif et un procédé de lecture d'un hologramme synthétique et, plus particulièrement, un dispositif de lecture compatible avec des hologrammes obtenus à partir d'images sources présentant une résolution élevée.

Exposé de l'art antérieur

Dans de nombreux secteurs, notamment dans l'industrie du luxe (par exemple la parfumerie, la bijouterie ou la maroquinerie), ou dans le domaine de médicament, la lutte contre la copie de produits de marque est une préoccupation quotidienne. De nombreux procédés et dispositifs sont actuellement utilisés pour tenter de garantir l'authenticité des produits de marque. Parmi ces techniques, il a été proposé de reporter, sur les produits à identifier, des puces transparentes sur lesquelles sont formés des hologrammes.

De tels hologrammes sont obtenus à partir d'une image source que l'on retrouve à la lecture de l'hologramme. La présence de l'hologramme est difficilement détectable à l'oeil nu, et sa lecture directe sans dispositif de lecture adapté ne permet pas d'identifier l'image source de l'hologramme.

Parmi les différentes catégories d'hologrammes, les hologrammes générés par ordinateur (CGH, de l'anglais Computer Generated Hologram) sont tout particulièrement adaptés à la réalisation de puces d'identification. En effet, de tels hologrammes peuvent être obtenus en calculant la transformée de Fourier inverse d'une image source puis en gravant le résultat obtenu sur une puce. Ces hologrammes sont lus à l'aide d'un système optique facilement manipulable, réalisant optiquement la transformée de Fourier de l'hologramme. Il est ainsi aisé d'obtenir l'image source de l'hologramme avec un dispositif de lecture adapté.

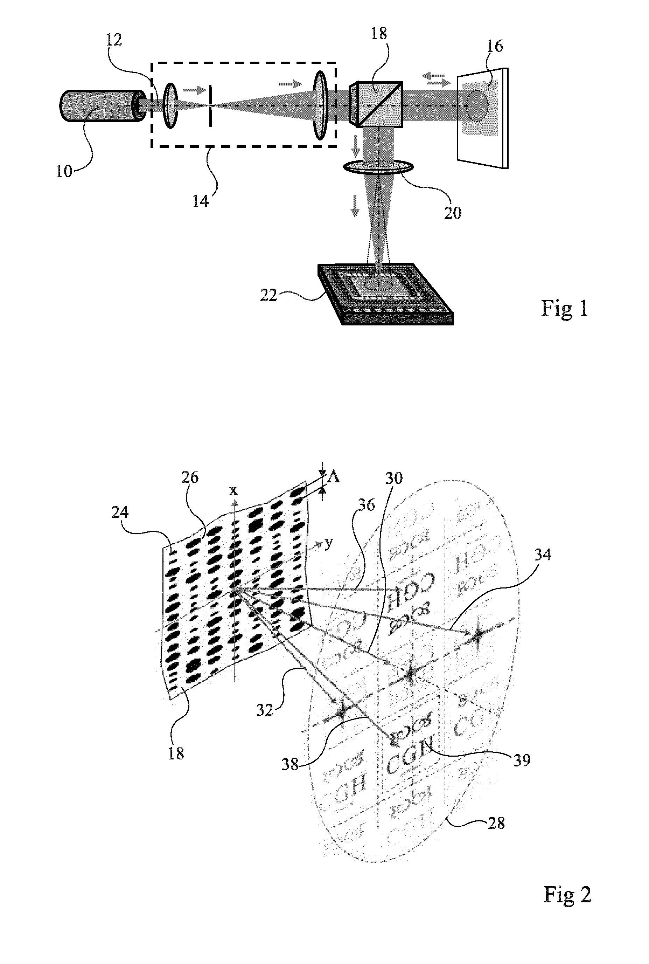

La figure 1 illustre un dispositif de lecture d'un hologramme synthétique. Dans cette figure, le dispositif de lecture est un dispositif en réflexion. On notera qu'il existe des dispositifs de lecture similaires en transmission (le faisceau lumineux utile traverse le support sur lequel est formé l'hologramme).

Une source lumineuse 10, par exemple un laser, génère un faisceau lumineux 12 qui est mis en forme par un système optique 14. Le système optique transforme le faisceau 12 en un faisceau de diamètre choisi qui est transmis en direction d'un support 16 sur lequel est formé un hologramme.

Un cube séparateur de faisceaux 18 est placé entre la sortie du système optique 14 et l'hologramme 16. Le cube séparateur 18 récupère le faisceau réfléchi par l'hologramme et le transmet en direction d'une lentille 20 disposée de sorte que le champ dans le plan image de la lentille 20 est la transformée de Fourier du champ au niveau de l'hologramme 16. Dans l'exemple de la figure 1, la lentille 20 effectue la reconstruction holographique dans le plan d'un système de détection d'image 22, par exemple une caméra.

La figure 2 illustre le résultat obtenu à l'aide d'un dispositif de lecture tel que celui de la figure 1, l'hologramme 18 étant un hologramme de type à détour de phase.

Pour former un tel hologramme, on part d'une image source dont on calcule la transformée de Fourier inverse. Ce calcul permet d'obtenir une image d'amplitude et une image de phase de l'hologramme. Chaque pixel de l'hologramme est constitué d'une ouverture formée dans une couche opaque qui s'étend sur un support. Pour chaque pixel de l'hologramme, la taille de l'ouverture correspond à l'amplitude et la position de l'ouverture correspond à la phase.

Avantageusement, des hologrammes à détour de phase sont facilement réalisables à l'aide de techniques courantes de gravure de couches opaques minces, utilisées notamment en microélectronique. Ces hologrammes peuvent être formés en une unique étape de photolithographie, ce qui constitue un avantage non négligeable par rapport à d'autres techniques de définition d'hologrammes. Notamment, cette technique est plus simple que les techniques de formation d'hologramme utilisant une lame dont l'épaisseur varie en fonction de la phase des pixels.

En figure 2, un exemple d'hologramme à détour de phase 18 est représenté. Comme on le voit dans cet exemple, selon un premier axe y, les pixels de l'hologramme sont alignés. Le codage de phase des pixels est réalisé selon un deuxième axe x. Pour des questions pratiques de réalisation, mais également pour un meilleur rendu lors de la lecture, des ouvertures 24 formées dans une couche opaque 26 présentent une forme ellipsoïdale.

En figure 2 est également illustré le résultat d'une lecture de l'hologramme 18, réalisée par exemple à l'aide du dispositif de la figure 1.

Dans le plan de lecture 28, le signal incident se retrouve principalement dans l'ordre zéro, référencé 30, ce qui produit une tache de focalisation intense au centre du champ de lecture. Une autre partie du signal se retrouve dans des ordres de diffraction 32 et 34 perpendiculaires à la direction de décalage des ouvertures (dans la direction y). Ces ordres produisent des taches de focalisation secondaires séparées du centre du champ d'une distance égale à $\lambda f/\Lambda$, $\lambda$ étant la longueur d'onde du faisceau lumineux éclairant l'hologramme, f la distance focale de la lentille et $\Lambda$ le pas de l'hologramme.

Deux ordres de diffraction 36 (image reconstruite 39) et 38 de l'hologramme se retrouvent de part et d'autre de l'ordre zéro de diffraction, selon l'axe x de décalage des ouvertures 24. Ces deux ordres étant conjugués, les deux distributions d'images sont symétriques par rapport au centre du champ. Chaque distribution est apodisée (atténuée en périphérie) par une fonction liée à la forme des ouvertures.

Au fur et à mesure que l'on s'éloigne de l'ordre zéro, le signal est progressivement atténué.

Une lecture classique de l'hologramme consiste à sélectionner une portion de l'image obtenue dans le plan de lecture, par exemple en plaçant un dispositif de détection d'images au niveau de l'image reconstruite 39 (ordre de diffraction 38). Cependant, l'essentiel de l'énergie du faisceau se retrouve dans l'ordre zéro où il n'y a pas d'effet de reconstruction holographique. Le reste du signal est réparti dans les autres ordres de diffraction, ce qui limite la résolution des images dans les différents ordres.

Ainsi, la résolution de l'image source de l'hologramme ne peut être fortement augmentée avec une lecture simple, notamment lorsque l'on cherche à intégrer, dans l'hologramme, une image contenant une information complexe telle qu'une data matrice (encore appelée "Datamatrix" ou code-barre 2D). En effet, pour détecter numériquement une data matrice, il est nécessaire que l'image reconstruite présente une qualité suffisante pour faire fonctionner un algorithme de décodage. Un tel algorithme se base sur des concepts de redondance et de recouvrement d'information permettant de gérer d'éventuelles perturbations sur l'image détectée de la data matrice (zones abimées, perte de contraste ou de netteté, bruit de détection). Un tel algorithme ne peut pas être efficace si la data matrice est trop perturbée.

Un besoin existe donc d'un dispositif de lecture permettant l'obtention d'une image de bonne qualité.

Résumé

Un objet d'un mode de réalisation de la présente invention est de prévoir un dispositif et un procédé de lecture d'un hologramme synthétique assurant une lecture de bonne qualité de l'information contenue dans l'hologramme.

Un autre objet d'un mode de réalisation de la présente invention est de prévoir un tel dispositif compatible avec des algorithmes de détection de formes.

Ainsi, un mode de réalisation de la présente invention prévoit un dispositif de lecture de l'image source d'un hologramme synthétique constituant la transformée de Fourier de l'image source formé sur un support, comprenant une lentille positionnée pour former la transformée de Fourier de l'hologramme dans le plan d'un système de détection d'images, les positions relatives de la lentille et dudit support étant choisies pour qu'un nombre désiré de répliques de l'image soit affiché dans le plan du système de détection, ce dispositif comprenant en outre un système de traitement adapté à réaliser une combinaison de répliques de l'image formées dans le plan du système de détection.

Selon un mode de réalisation, les divers éléments sont dimensionnés pour afficher dans le plan du système de détection au moins les répliques d'ordre -1,0 et 1,0.

Selon un mode de réalisation, les divers éléments sont dimensionnés pour afficher dans le plan du système de détection les répliques d'ordre -1,0 et 1,0 et au moins une partie des répliques d'ordre 1,1, -1,1, -1,-1 et 1,-1.

Selon un mode de réalisation, ladite combinaison consiste en un calcul de moyenne des différentes répliques.

Selon un mode de réalisation, le support est placé sur le trajet d'un faisceau issu de la source lumineuse avant la lentille, à une distance de ladite lentille égale à sa distance focale, le système de détection étant placé dans le plan focal objet de ladite lentille, la lentille ayant une distance focale f comprise entre $\Sigma/2$ et $\Sigma\Lambda/2\Gamma\lambda$, de préférence égale à $\Sigma\Lambda/2\Gamma\lambda$, $\Sigma$ étant la largeur du système de détection d'image, $\Lambda$ étant le pas de l'hologramme, $\Gamma$ étant le rayon du champ image en nombre de largeurs d'image holographique, et $\lambda$ étant la longueur d'onde du faisceau issu de la source lumineuse.

Selon un mode de réalisation, le support est placé sur le trajet d'un faisceau issu de la source lumineuse entre la lentille et le système de détection d'images, le système de détection étant placé dans le plan focal objet de la lentille, la distance d entre ledit support et ledit système de détection étant comprise entre $\Sigma/2$ et $\Sigma\Lambda/2\Gamma\lambda$, de préférence égale à $\Sigma\Lambda/2\Gamma\lambda$, $\Sigma$ étant la largeur du système de détection d'image, $\Lambda$ étant le pas de l'hologramme, $\Gamma$ étant le rayon du champ image en nombre de largeurs d'image holographique, et $\lambda$ étant la longueur d'onde du faisceau issu de la source lumineuse.

Selon un mode de réalisation, la fonction optique de la lentille est contenue dans l'hologramme, le support étant placé à une distance du système de détection d'images égale à la distance focale f de la lentille, ladite distance focale étant comprise entre $\Sigma/2$ et $\Sigma\Lambda/2\Gamma\lambda$, de préférence égale à $\Sigma\Lambda/2\Gamma\lambda$, $\Sigma$ étant la largeur du système de détection d'image, $\Lambda$ étant le pas de l'hologramme, $\Gamma$ étant le rayon de l'image détectée en nombre de largeurs d'image holographique, et $\lambda$ étant la longueur d'onde du faisceau issu de la source lumineuse.

Selon un mode de réalisation, le diamètre de la lentille est au moins égal à la largeur $\Sigma$ du système de détection d'images.

Selon un mode de réalisation, une source lumineuse d'éclairement de l'hologramme est choisie pour éclairer l'ensemble de la surface de l'hologramme formé sur le support.

Selon un mode de réalisation, l'image source de l'hologramme est une data matrice.

Selon un mode de réalisation, un masque est prévu au centre du système de détection d'images pour occulter l'ordre 0.

Selon un mode de réalisation, le masque présente un diamètre égal à $\lambda f/4\Lambda$, $\lambda$ étant la longueur d'onde du faisceau issu de la source lumineuse, f la distance focale de la lentille et $\Lambda$ étant le pas de l'hologramme.

Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1, précédemment décrite, illustre un exemple d'un dispositif de lecture d'un hologramme synthétique connu ;

la figure 2 illustre un exemple de résultat obtenu à l'aide d'un dispositif de lecture tel que celui de la figure 1 sur un hologramme synthétique à détour de phase ;

la figure 3 illustre un résultat d'une lecture d'un hologramme issu d'une image source de type data matrice ;

les figures 4, 5 et 6 illustrent des règles de conception de dispositifs de lecture selon différents modes de réalisation ; et

les figures 7A, 7B, 8A et 8B illustrent une comparaison de résultats de lectures à l'aide d'un dispositif de lecture classique et à l'aide d'un dispositif de lecture selon un mode de réalisation.

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

Description détaillée

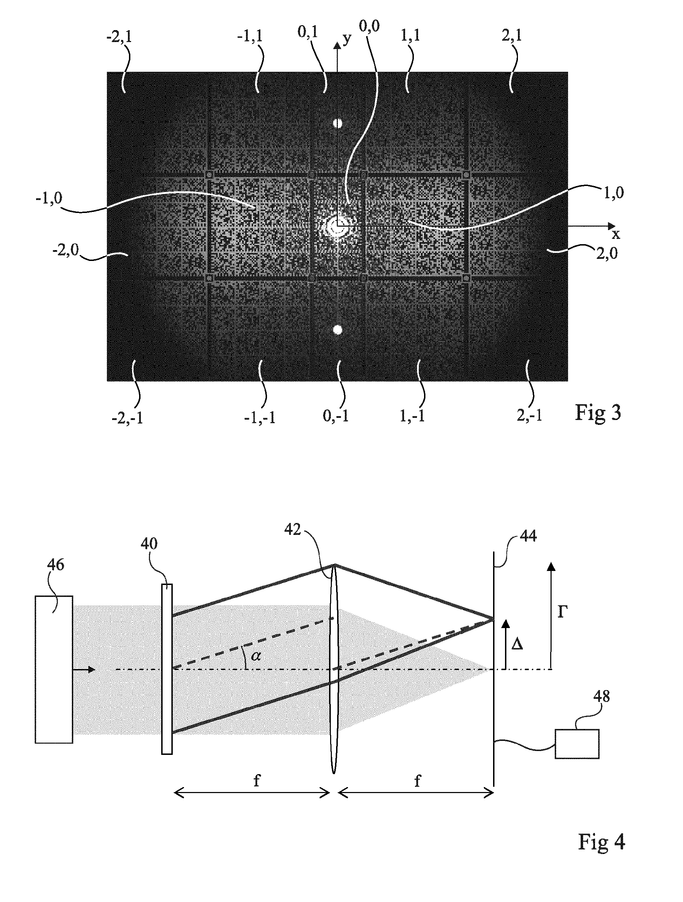

La figure 3 illustre le résultat d'une lecture d'un hologramme synthétique obtenu à partir d'une image source de type data matrice.

On peut voir en figure 3, comme en figure 1, plusieurs répliques de l'image reconstituée. L'image centrale (ordre 0,0) n'est pas exploitable, comme on l'a indiqué précédemment, pas plus que les répliques situées en dessus et en dessous de cet ordre central (ordres 0,1 et 0,-1). Par contre les répliques situées dans les autres ordres correspondent bien à l'image source de l'hologramme, les répliques les plus lumineuses correspondant aux ordres 1,0 et -1,0. D'autres répliques se trouvant dans les ordres 1,1, -1,1, -1,-1 et 1,-1 sont encore relativement lumineuses. Les répliques dans les ordres plus éloignés sont par contre très peu lumineuses.

On notera que, dans le mode de réalisation de la figure 3, pour favoriser la luminosité dans les répliques d'ordres 1,0 et -1,0, on a modifié l'hologramme synthétique pour que les centres de ces répliques soient rapprochés du centre du champ complet situé à l'ordre 0,0.

On prévoit ici, contrairement aux dispositifs de lecture actuels des hologrammes synthétiques dans lesquels on isole l'une des répliques de l'image pour la lecture couramment la réplique 1,0 ou -1,0, de mettre à profit la duplication des images source de l'hologramme lors de la lecture dans le plan de reconstruction de l'hologramme pour améliorer le décodage des informations. On pourra utiliser les deux répliques d'ordres 1,0 et -1,0 ou les six répliques d'ordres 1,0, -1,0, 1,1, -1,1, -1,-1 et 1,-1, ces dernières répliques étant utilisées totalement ou partiellement.

Ainsi, le champ de détection est étendu de manière à collecter plusieurs répliques de l'image source, par exemple la data matrice. Chaque réplique contenant la même information avec des facteurs de bruit différents, la réalisation d'un calcul de moyenne des répliques permet une amélioration de la détection des données codées.

Comme on le voit en figure 3, plus on s'éloigne du halo de lumière d'ordre zéro, plus la lisibilité de l'image source diminue. Ceci provient notamment du dimensionnement de la lentille dans le système de lecture. On décrira ci-après diverses réalisations de dispositifs de lecture dont les dimensions sont optimisées pour assurer la lecture d'un nombre prédéterminé de répliques, couplés à un système de traitement de l'information détectée par un capteur d'image, par exemple une caméra, assurant la réalisation d'une moyenne sur les différentes répliques de l'image.

Les figures 4, 5 et 6 illustrent des règles de conception de dispositifs de lecture selon différents modes de réalisation.

Par la suite, on appellera $\Sigma$ la largeur d'un dispositif de détection d'images sur lequel on veut réaliser l'acquisition de plusieurs répliques de l'image source de l'hologramme pendant la lecture. On appellera $\Lambda$ le pas de l'hologramme, et $\lambda$ la longueur d'onde d'un faisceau issu d'une source lumineuse d'éclairement du dispositif de lecture, par exemple un laser. On appellera $\Delta$ la largeur d'image holographique, c'est-à-dire la taille d'une image source de l'hologramme obtenue sur le dispositif de détection d'images, et $\Gamma$ le rayon du champ image, en nombre de largeurs d'image holographique $\Delta$, c'est-à-dire un paramètre caractérisant le nombre de répliques de l'image que l'on souhaite obtenir sur le dispositif de détection d'image.

Dans le cas de la figure 4, on prévoit un dispositif de lecture comprenant un support 40 sur lequel est formé un hologramme, une lentille 42 et un système de détection d'images 44. Dans ce premier cas, la lentille est placée entre le support 40 et le système de détection d'images 44. Le support 40 est placé à une distance de la lentille égale à la distance focale f de celle-ci, et le système de détection d'image 44 est placé à une distance de la lentille 42 égale à la distance focale f de celle-ci. Un faisceau de lecture, issu d'une source lumineuse 46, traverse l'hologramme avant de passer au travers de la lentille 42 et d'être projeté sur le système de détection 44 où se forment des répliques multiples de l'image source de l'image holographique. Un système de traitement de l'information 48, représenté schématiquement, est associé au système de détection 44. Dans cette configuration, on a représenté le positionnement de l'ordre de reconstruction holographique à la distance Δ de l'axe optique, ainsi que le rayon Γ du champ image.

Dans ce cas, la largeur d'image holographique Δ est égale à λf/Λ. Pour obtenir un champ image de rayon Γ souhaité, en nombre de largeurs d'image holographique Δ, la distance focale f de la lentille doit être choisie de façon à respecter l'équation suivante :

$$\frac{\Sigma}{2} \leqslant f \leqslant \frac{\Sigma . \Lambda}{2 . \Gamma . \lambda} .$$

On notera que la valeur inférieure de la distance focale f provient de limites en fabrication de la lentille, et du fait que le rayon Γ est en pratique au moins égal à 2. Avantageusement, la distance focale f pourra être choisie égale à la limite supérieure de la gamme ci-dessus pour optimiser l'étendue de la répartition souhaitée des images holographiques.

En outre, et cela d'une manière générale pour les différents cas des figures 4 à 6, pour permettre une reconstruction optimale de l'image dans le plan du détecteur, le diamètre de la lentille sera au moins égal à la largeur Σ du dispositif de détection.

On notera en outre que, plutôt que de choisir une lentille de distance focale prédéterminée en fonction des paramètres ci-dessus, et notamment en fonction de la taille du système de détection d'images 44, on pourra imposer une distance focale de la lentille et obtenir les tailles minimale et maximale du système de détection adaptées à la lecture du nombre de répliques de l'image souhaité.

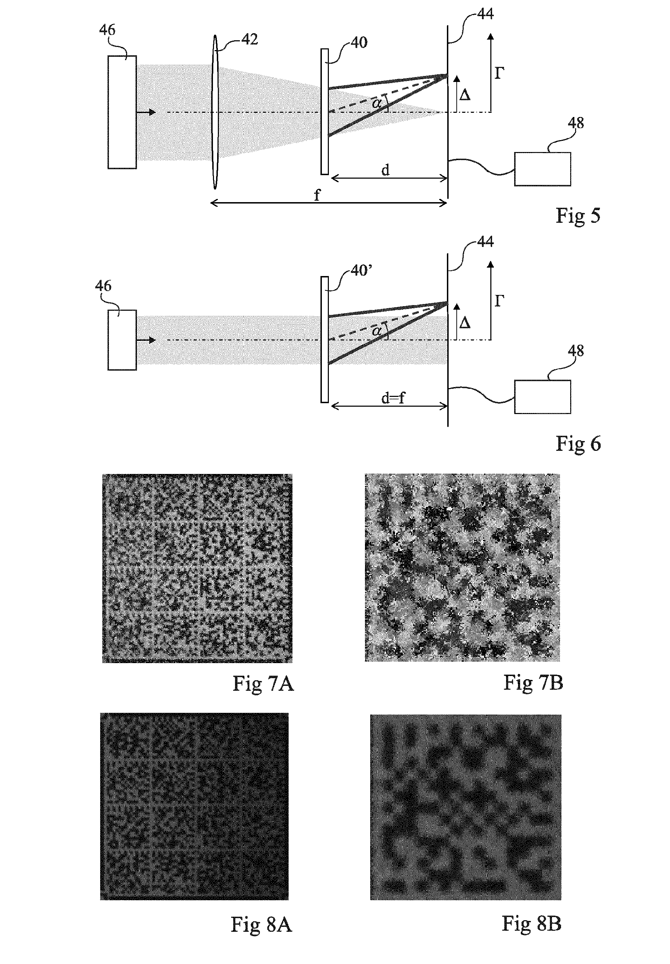

Dans le cas de la figure 5, on prévoit un dispositif de lecture comprenant un support 40 d'un hologramme, une lentille 42 et un système de détection d'images 44. Dans ce cas, l'hologramme 40 est placé entre la lentille 42 et le système de détection d'images 44. La lentille 42 est placée à une distance du système de détection d'images 44 égale à la distance focale de celle-ci, et l'hologramme 40 est placé par rapport au système de détection d'images 44 à une distance d.

Une source lumineuse 46 éclaire l'hologramme formé sur le support 40, et un système de traitement de l'information 48 est connecté au système de détection d'images 44. Dans cette configuration, la distance entre l'ordre 1 de reconstruction holographique et l'axe optique du dispositif n'est plus donnée par la distance focale de la lentille mais par la distance d.

Dans ce cas, la largeur d'image holographique Δ est égale à λd/Λ. Pour obtenir un champ image de rayon Γ souhaité, en nombre de largeurs d'image holographique Δ, la distance d entre l'hologramme et le système de détection d'images 44 doit être choisie de façon à respecter l'équation suivante :

$$\frac{\Sigma}{2} \leq d \leq \frac{\Sigma . \Lambda}{2 . \Gamma . \lambda} .$$

Avantageusement, la distance d pourra être choisie égale à la limite supérieure de la gamme ci-dessus pour optimiser l'étendue de la répartition souhaitée des images holographiques.

On notera que, plutôt que de définir un dispositif de lecture dans lequel la distance d est fixée par les paramètres ci-dessus, et notamment par la taille du système de détection d'images 44, on pourra imposer une distance d entre le support 40 et le système de détection 44 et obtenir la taille minimale du système de détection adaptée à la lecture du nombre de répliques de l'image souhaité.

Dans le cas de la figure 6, on prévoit un cas alternatif dans lequel la lentille est intégrée à la fonction de phase de l'hologramme pour former un bloc 40'. Dans ce cas, le bloc 40' est placé à une distance d'un système de détection d'images 44 égale à la distance focale f de la lentille. Une source lumineuse 46 éclaire le support 40, et un système de traitement de l'information 48 est connecté au système de détection 44.

Dans ce cas, la largeur d'image holographique Δ est égale à λf/Λ. Pour obtenir un champ image de rayon Γ souhaité, en nombre de largeurs d'image holographique Δ, la distance focale f de la lentille doit être choisie de façon à respecter l'équation suivante :

$$\frac{\Sigma}{2} \leq f \leq \frac{\Sigma . \Lambda}{2 . \Gamma . \lambda} .$$

Avantageusement, la distance focale f pourra être choisie égale à la limite supérieure de la gamme ci-dessus pour optimiser l'étendue de la répartition souhaitée des images holographiques.

On notera que, dans ce dernier cas, le faisceau lumineux de lecture n'est pas focalisé au niveau de la surface du système de détection d'images 44. L'hologramme d'amplitude n'introduit pas de fonction de phase sur l'ordre zéro, ce qui implique que la fonction lentille introduite n'est effective que dans les ordres de diffraction de l'hologramme.

A titre d'exemple d'application numérique, on pourra utiliser un hologramme ayant un pas Λ = 4 μm, et une source lumineuse de longueur d'onde λ = 650 nm, en choisissant un paramètre Γ = 2. La caméra utilisée pourra comporter un capteur de taille égale à 8,6 x 6,9 mm², la largeur Σ étant ainsi fixée à 8,6 mm. Les calculs ci-dessus donnent une focale maximale de 13,2 mm et minimale de 4,3 mm, avec un diamètre de la lentille d'au moins 8,6 mm. On peut ainsi choisir, par exemple, une référence de lentille en catalogue présentant une distance focale de 12 mm et un diamètre de 9 mm. Dans ce cas, le rayon du champ image devient égal à 2,2 images holographiques.

Avantageusement, l'utilisation d'un dispositif de lecture paramétré selon l'une des solutions ci-dessus permet la réalisation d'une acquisition d'image par le système de détection d'images 44 comprenant un nombre prédéterminé de répliques de l'image source de l'hologramme.

Les figures 7A, 7B, 8A et 8B illustrent une comparaison de résultats de lecture à l'aide d'un dispositif de lecture classique (figures 7A et 7B) et à l'aide d'un dispositif de lecture selon un mode de réalisation (figures 8A et 8B). Plus particulièrement, la figure 7A illustre le résultat d'une lecture directe d'une unique image de type data matrice dans le plan de lecture, et la figure 7B illustre un agrandissement de cette lecture. La figure 8A illustre le résultat d'une lecture d'une image source d'un hologramme en forme de data matrice dans le plan de lecture en utilisant le dispositif de lecture de l'invention, 12 répliques de l'image étant moyennées dans ce cas par le système de traitement 48, et la figure 8B est un agrandissement de la figure 8A.

Comme on peut le voir dans ces figures, une lecture simple d'une unique image source hologramme paraît à première vue de bonne qualité. Cependant, lorsque l'on regarde à l'agrandissement de la figure 7B, on voit que les détails sont peu lisibles, ce qui implique une limite en résolution de l'image source de l'hologramme et peut poser des problèmes de décodage de la data matrice.

A l'inverse, l'agrandissement représenté en figure 8B de la lecture de la figure 8A présente une meilleure résolution de lecture. On peut ainsi, en adaptant le dispositif de lecture de la façon ci-dessus, travailler avec des images sources d'hologrammes de plus grande résolution, puisque la totalité du champ diffracté est mise à profit lors de la lecture. La moyenne réalisée par le système de traitement 48, par exemple une moyenne pixel par pixel des répliques de l'image source, permet de réduire l'influence du bruit, mais assure également que l'énergie diffractée par la structure soit utilisée avec un meilleur rendement.

Pour assurer une bonne réalisation de la lecture, on notera que la source lumineuse 46 sera choisie de façon à éclairer le maximum de la surface de l'hologramme, si possible la totalité de la surface de l'hologramme.

Des modes de réalisation particuliers de la présente invention ont été décrits. Diverses variantes et modifications apparaîtront à l'homme de l'art.

Notamment, bien que les dispositifs de lecture aient été représentés en figures 4 à 6 comme étant des dispositifs de lecture en transmission, les règles de dimensionnement proposées ici s'adaptent aisément à des dispositifs de lecture en réflexion tels que celui de la figure 1. Pour le cas de la figure 4, la lentille est placée par exemple sur le trajet optique entre le cube séparateur de faisceaux et le système de détection et, pour le cas de la figure 5, la lentille est placée sur le trajet optique par exemple avant le cube séparateur de faisceaux.

En outre, on notera que l'image source de l'hologramme pourra être prévue avec des zones distinctives sur son contour (repère d'alignement) pour aider à la détection des images reconstruites par le système de traitement 48.

Enfin, pour améliorer la lecture, on pourra également prévoir de modifier le système de détection d'images 44 pour y définir une zone aveugle au niveau du pic d'intensité central. Par exemple, cela peut être réalisé par collage sur le système de détection d'une pastille piège à lumière au centre du système de détection. La zone non utile au centre du champ couvrant environ la moitié de la largeur de l'image de base, on peut choisir une zone aveugle présentant un diamètre égal au quart de cette valeur, c'est-à-dire égal à $\lambda f/4\Lambda$.

## Revendications

1. Dispositif de lecture de l'image source d'un hologramme synthétique constituant la transformée de Fourier de l'image source formé sur un support (40), comprenant une lentille (42) positionnée pour former la transformée de Fourier de l'hologramme dans le plan d'un système de détection d'images (44), les positions relatives de la lentille et dudit support étant choisies pour qu'un nombre désiré de répliques de l'image soit affiché dans le plan du système de détection, ce dispositif comprenant en outre un système de traitement (48) adapté à réaliser une combinaison de répliques de l'image formées dans le plan du système de détection.

2. Dispositif selon la revendication 1, dans lequel les divers éléments sont dimensionnés pour afficher dans le plan du système de détection au moins les répliques d'ordre -1,0 et 1,0.

3. Dispositif selon la revendication 1, dans lequel les divers éléments sont dimensionnés pour afficher dans le plan du système de détection les répliques d'ordre -1,0 et 1,0 et au moins une partie des répliques d'ordre 1,1, -1,1, -1,-1 et 1,-1.

4. Dispositif selon l'une quelconque des revendications 1 à 3, dans lequel ladite combinaison consiste en un calcul de moyenne des différentes répliques.

5. Dispositif selon l'une quelconque des revendications 1 à 4, dans lequel le support (40) est placé sur le trajet d'un faisceau issu de la source lumineuse (46) avant la lentille (42), à une distance de ladite lentille (42) égale à sa distance focale, le système de détection (44) étant placé dans le plan focal objet de ladite lentille (42), la lentille ayant une distance focale

(f) comprise entre $\Sigma/2$ et $\Sigma\Lambda/2\Gamma\lambda$, de préférence égale à $\Sigma\Lambda/2\Gamma\lambda$, $\Sigma$ étant la largeur du système de détection d'image (44), $\Lambda$ étant le pas de l'hologramme, $\Gamma$ étant le rayon du champ image en nombre de largeurs d'image holographique, et $\lambda$ étant la longueur d'onde du faisceau issu de la source lumineuse (46).

6. Dispositif selon l'une quelconque des revendications 1 à 4, dans lequel le support (40) est placé sur le trajet d'un faisceau issu de la source lumineuse (46) entre la lentille (42) et le système de détection d'images (44), le système de détection (44) étant placé dans le plan focal objet de la lentille (42), la distance (d) entre ledit support (40) et ledit système de détection étant comprise entre $\Sigma/2$ et $\Sigma\Lambda/2\Gamma\lambda$, de préférence égale à $\Sigma\Lambda/2\Gamma\lambda$, $\Sigma$ étant la largeur du système de détection d'image (44), $\Lambda$ étant le pas de l'hologramme, $\Gamma$ étant le rayon du champ image en nombre de largeurs d'image holographique, et $\lambda$ étant la longueur d'onde du faisceau issu de la source lumineuse (46).

7. Dispositif selon la revendication 1, dans lequel la fonction optique de la lentille (42) est contenue dans l'hologramme, le support (40) étant placé à une distance du système de détection d'images (44) égale à la distance focale (f) de la lentille, ladite distance focale étant comprise entre $\Sigma/2$ et $\Sigma\Lambda/2\Gamma\lambda$, de préférence égale à $\Sigma\Lambda/2\Gamma\lambda$, $\Sigma$ étant la largeur du système de détection d'image, $\Lambda$ étant le pas de l'hologramme, $\Gamma$ étant le rayon de l'image détectée en nombre de largeurs d'image holographique, et $\lambda$ étant la longueur d'onde du faisceau issu de la source lumineuse (46).

8. Dispositif selon l'une quelconque des revendications 1 à 7, dans lequel le diamètre de la lentille (42) est au moins égal à la largeur ($\Sigma$) du système de détection d'images (44).

9. Dispositif selon l'une quelconque des revendications 1 à 8, dans lequel une source lumineuse (46) d'éclairement de l'hologramme est choisie pour éclairer l'ensemble de la surface de l'hologramme formé sur le support (40).

10. Dispositif selon l'une quelconque des revendications 1 à 9, dans lequel l'image source de l'hologramme est une data matrice.

11. Dispositif selon l'une quelconque des revendications 1 à 10, dans lequel un masque est prévu au centre du système de détection d'images (44) pour occulter l'ordre 0.

12. Dispositif selon la revendication 11, dans lequel le masque présente un diamètre égal à $\lambda f/4\Lambda$, $\lambda$ étant la longueur d'onde du faisceau issu de la source lumineuse (46), f la distance focale de la lentille (42) et $\Lambda$ étant le pas de l'hologramme.

Fig 1

Fig 2

Fig 3

Fig 4

Fig 5

Fig 6

Fig 7A

Fig 7B

Fig 8A

Fig 8B

Europäisches
Patentamt

European
Patent Office

Office européen
des brevets

## RAPPORT DE RECHERCHE EUROPEENNE

Numéro de la demande

EP 13 17 2964

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MISHINA T ET AL: "VIEWING-ZONE ENLARGEMENT METHOD FOR SAMPLED HOLOGRAM THAT USES HIGH-ORDER DIFFRACTION", APPLIED OPTICS, OPTICAL SOCIETY OF AMERICA, WASHINGTON, DC; US, vol. 41, no. 8, 10 mars 2002 (2002-03-10), pages 1489-1499, XP001102391, ISSN: 0003-6935, DOI: 10.1364/AO.41.001489 | 1-4,8-11 | INV. G03H1/22 |
| A | * abrégé * * figures 12,13 * * page 1493 - page 1496 * ----- | 5-7,12 | |
| A | MISHINA T ET AL: "Combination enlargement method of viewing zone for computer-generated holography", PROCEEDINGS OF SPIE, S P I E - INTERNATIONAL SOCIETY FOR OPTICAL ENGINEERING, US, vol. 3956, 1 janvier 2000 (2000-01-01), pages 184-192, XP002278763, ISSN: 0277-786X, DOI: 10.1117/12.379993 * le document en entier * ----- | 1-12 | |

DOMAINES TECHNIQUES RECHERCHES (IPC)

G03H

Le présent rapport a été établi pour toutes les revendications

| Lieu de la recherche | Date d'achèvement de la recherche | Examinateur |
|---|---|---|
| Munich | 23 août 2013 | Sittler, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)